# EUROPEAN PATENT SPECIFICATION

(11) **EP 3 412 516 B1**
(45) Date of publication and mention of the grant of the patent: **11.12.2019**
(21) Application number: 17174526.8
(22) Date of filing: 06.06.2017
(51) Int. Cl.: B60R 21/203

(54) **AIRBAG MODULE**
AIRBAGMODUL
MODULE DE COUSSIN D'AIR DE SÉCURITÉ GONFLABLE

(43) Date of publication of application: 12.12.2018
(73) Proprietor: Autoliv Development AB, 447 83 Vårgårda (SE)
(72) Inventor: Evrat, Nicolas, 76160 Saint-Léger-du-Bourg-Denis (FR); Carpentier, Frank, 76440 Saumont-la-Poterie (FR); Lanvin, Cyrille, 60650 Saint-Aubin-en-Bray (FR)
(74) Representative: Schön, Thilo

(56) References cited:
- DE-A1- 4 326 368
- DE-A1-102005 027 271
- DE-B3-102011 122 465
- US-A1- 2004 130 131
- US-B1- 6 412 812

## Description

The invention relates to an airbag module according to the preamble of claim 1.

Driver airbag modules which are located in the hub area of a steering wheel usually comprise a housing, an airbag package being at least partially located in said housing, a cover and an inflator. The cover most often has a roof and a cover sidewall extending from the roof. A central part of the roof spans over a deployment opening of the housing. In most cases the cover sidewall is attached to the housing, namely to the housing sidewall, with the cover sidewall extending essentially parallel to the housing sidewall. In the case of a so-called floating module (in which the whole module can be pressed down against a main body of the steering wheel in order to activate the horn) the cover is rigidly attached to the housing, meaning that the cover sidewall is rigidly attached to the housing sidewall. In case of a so-called floating cover module the cover is not rigidly attached to the housing such that the cover sidewall is in sliding connection to the housing sidewall. In this case the housing is rigidly attached to the steering wheel body such that the cover can be pressed down in order to activate the horn without moving the housing relative to the steering wheel body. The invention relates to both cases.

Often attachment hooks extend from the housing sidewall and the cover sidewall shows respective windows through which the attachments hooks extend.

In order to provide the needed stiffness to the cover sidewall without substantially increasing the weight of the cover, it is known in the prior art to provide the cover sidewall with a plurality of ribs such that the cover sidewall comprises a cover sidewall main portion having an inner surface and an outer surface and ribs protruding from the outer surface of the cover sidewall main portion. The ribs usually extend in an axial direction from a roof proximate end to a floor-side end.

In some configurations of the steering wheel, at least an upper part of a section of the cover sidewall is visible from the inside of the passenger compartment. If it is necessary for technical reasons to provide this section of the cover sidewall with ribs this may lead to an unfavourable optical appearance.

DE10 2005 027 271 A1 discloses a cover for an airbag module.

Starting from this it is the task of the invention to improve a generic airbag module such that the optical appearance is improved without making any compromise in view of technical usability, weight and size.

This task is solved with an airbag module with the features of claim 1.

According to the invention the plurality of ribs comprises a first kind of ribs having a roof proximal section protruding from the inner surface of the cover sidewall main portion and a roof distal section protruding from the outer surface of the cover sidewall main portion. In other words: At least some of the ribs (referred to as first kind of ribs or ribs of a first kind) change their position relative to the main portion of cover sidewall main portion. As one will see in view of the detailed description this makes it possible to have no visible ribs while maintaining all mechanical properties (size, weight and stiffness) of a generic airbag module.

Since it is often desired not to increase the outer diameter of the cover sidewall, the cover sidewall main portion of the section of the cover sidewall which shows the ribs of the first kind also has a roof proximal part and roof distal part. These two parts are not aligned: The roof proximal part is outward relative to the roof distal part. By this measure the total thickness of the cover sidewall is not increased.

Further, the total thickness of the cover sidewall section comprising the first kind of ribs is constant along the entire height of the ribs of the first kind (from their roof-side end to their roof-remote end).

Since usually only a small part of the cover is visible it can be preferred that the cover sidewall additionally comprises a second kind of ribs extending completely from the outer surface of the sidewall main portion.

The invention will now be described by means of preferred embodiments in view of the figures.

The figures show:
- Figure 1: a driver airbag module according to the invention in a schematic sectional view,
- Figure 2: the airbag module of Figure 1 in a side view from direction R,
- Figure 3: the cover of the airbag module of Figures 1 and 2 in a representation according to Figure 2 with the roof proximal sections of ribs of a first kind being shown in dashed lines,
- Figure 4: the cover of Figure 3 in a representation according to Figure 1,
- Figure 5: a sectional view taken along plane A-A of Figure 4,
- Figure 6: an airbag module according to the invention which is basically designed as the airbag module of Figure 1 in a more detailed perspective view,
- Figure 7: the airbag module of Figure 6 in a view from a different angle,
- Figure 8: A plan view to the bottom of the airbag module of Figures 6 and 7.

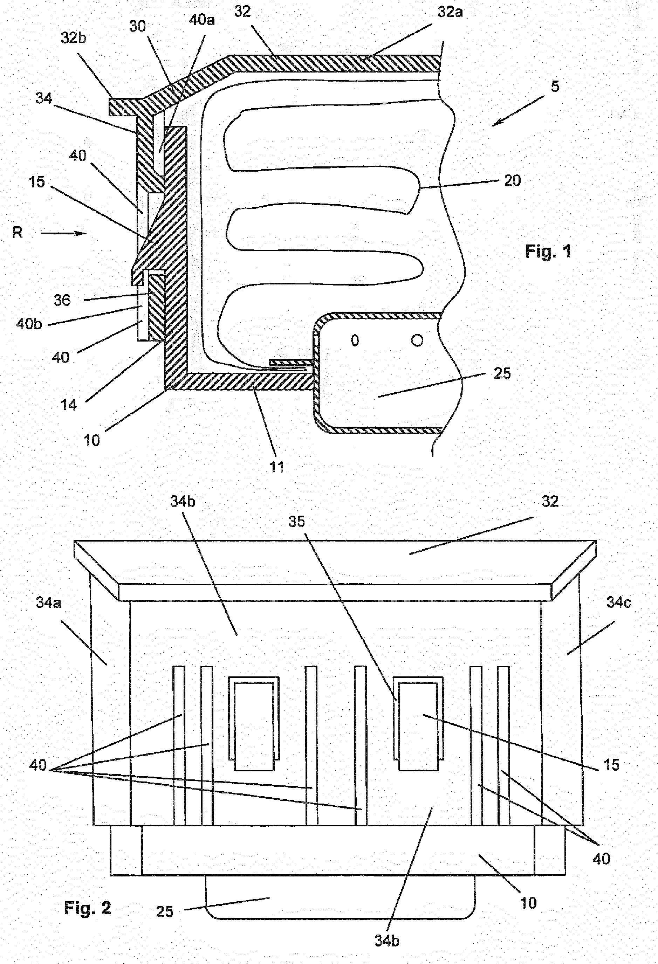

Figures 1 to 5 show an embodiment of the invention in different schematic representations. In the following reference is made to all of these five Figures. As can be seen for example from Figures 1 and 2 the airbag module 5, which is usually a driver airbag module, is comprised of a housing 10, an inflator 25, a cover 30 and an airbag package 20. The housing 10 has a housing floor 11 and a housing sidewall 14. In the embodiment shown the housing floor 11 has basically the shape of an octagon so that the housing sidewall 14 has eight sections. The inflator 25 extends through a central hole of the housing floor 11 and is attached to the same via a flange. The housing 10 is open opposite the housing floor 11 such that it has a deployment opening 16.

At least a part of the airbag package 20 is located in the accommodation space defined by the housing 10 but a part of this airbag package 20 may extend through the deployment opening 16.

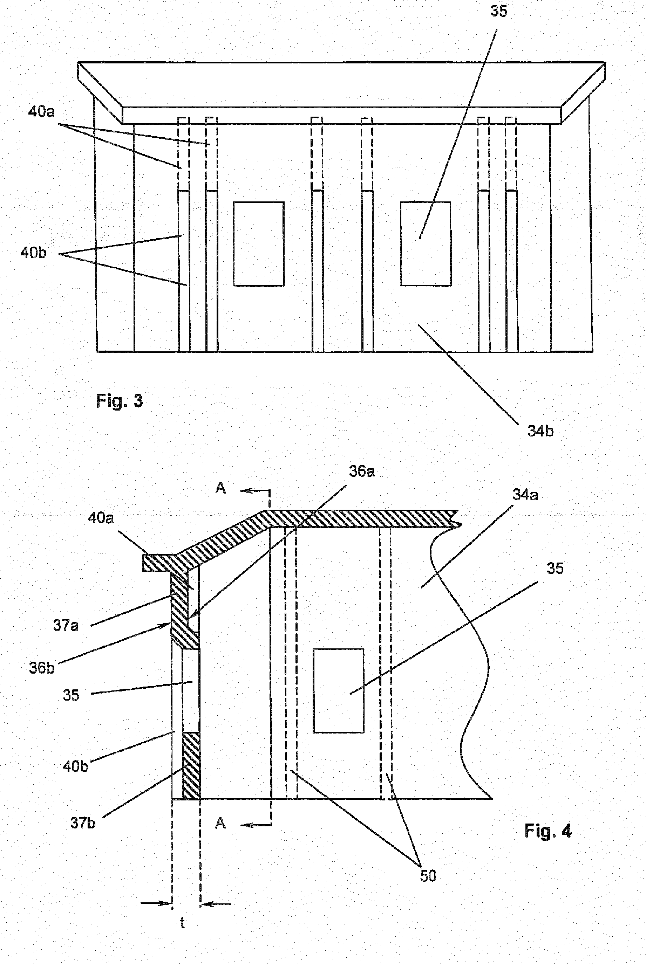

The cover 30 comprises a roof 32 and a cover sidewall 34 extending from said roof 32. The roof 32 comprises a central part 32a extending over the deployment opening 16 and a projecting part 32b projecting from this central part 32a. The cover sidewall extends from the roof 32 and basically follows the shape of the housing sidewall 14 such that it has eight sections in this embodiment. The cover sidewall has a roof-side end and a floor-side end. In the representations of Figures 2 and 3 three of these sections are shown (reference numbers 34a, 34b and 34c). It goes without saying that the invention is not limited to cover sidewalls with an octagonal cross-section. The cover sidewall could also have any another cross section, for example a rectangular or a circular cross section. The cover can be a single-pieced injection-moulded part.

As has been mentioned, the cover 30 is attached to the housing 10, namely to the housing sidewall 14. This connection can be made in a manner that the cover cannot be pressed down relative to the housing or in a manner that the cover 30 can be pressed down against the housing 10 (as shown). In the embodiment shown the housing sidewall 14 shows a number of attachment hooks 15 each extending through a window 35 in the cover sidewall 34.

At least some of the sections of the cover sidewall 34 have ribs in order to enhance the stiffness of the respective section of the cover sidewall. These ribs extend from a roof-side end to a roof-remote end. It is in most cases preferred that the ribs extend along the entire height of the cover sidewall, but this is not mandatory.

According to the invention at least some of these ribs are of a special design. The ribs of this kind are referred to as ribs 40 of a first kind (or first kind or ribs 40). In the embodiment shown the second section 34b of the cover sidewall carries such ribs 40 of the first kind and the design of these ribs 40 and the design of this section of the cover sidewall will now be explained in detail in view of Figures 3 to 5.

The cover sidewall has a cover sidewall main portion 36 with an inner surface 36a and an outer surface 36b (see for example Figure 4). The ribs 40 of the first kind each have two sections namely a roof proximal sections 40a protruding from the inner surface 36a of the cover sidewall main portion 36 and a roof distal section 40b protruding from the outer surface 36b of the cover sidewall main portion 36. The roof proximal sections 40a of the ribs 40 the first kind are shown in dotted lines in Figure 3. As one can also see from Figure 4 the cover sidewall main portion 36 also has a roof proximal part 37a and roof distal part 37b. The two parts 37a, 37b are not aligned, they are offset to one another (they are not located in the same geometrical plane). The roof proximal part 37a of the cover sidewall main portion is (in radial direction) outward relative to the roof distal part 37b of the cover sidewall main portion. So, one could say that the ribs 40 of the first kind and the cover sidewall main portion 36 change their positions.

By the above described measure the overall thickness t of the respective sidewall section (here the second sidewall section 34b) remains constant along the height of the ribs - as can best be seen from Figure 4 - and does not need to exceed the overall thickness of a sidewall section with "traditional" ribs, such that this special design of the ribs 40 of the first kind does not lead to an additional demand of space.
The upper part of the respective side section of the sidewall (here the second section 34b) is free of visible ribs but still the lower portion of the respective sidewall section can fully abut to the respective section of the housing sidewall 14.

It is to be noted that it is possible that an inventive airbag module 5 comprises ribs of a first kind as just described as well as other kind of ribs, especially ribs 50 which exclusively extend from the outer surface of the cover sidewall main portion.

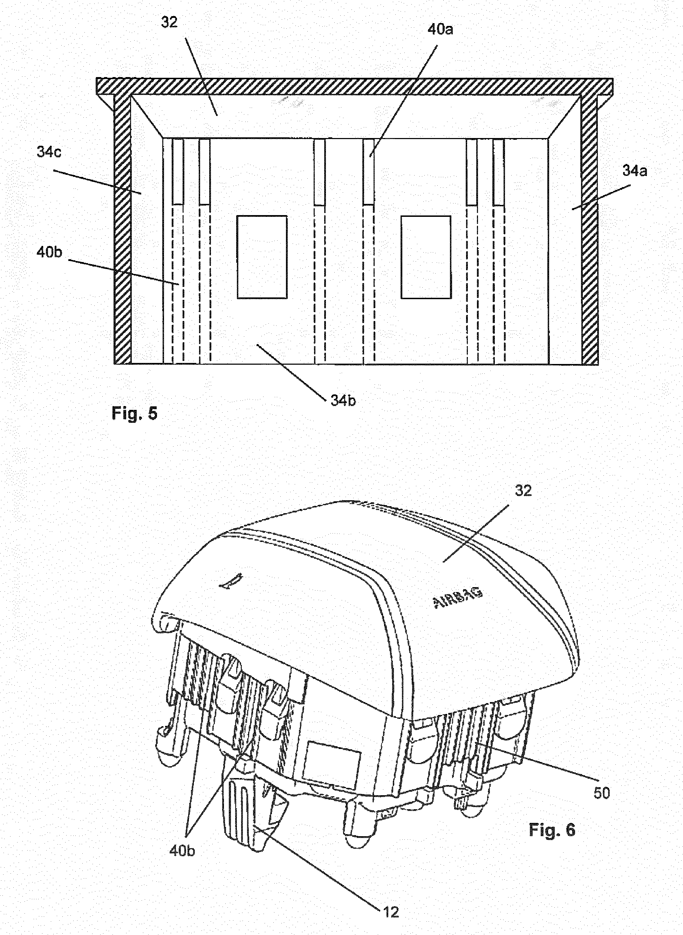

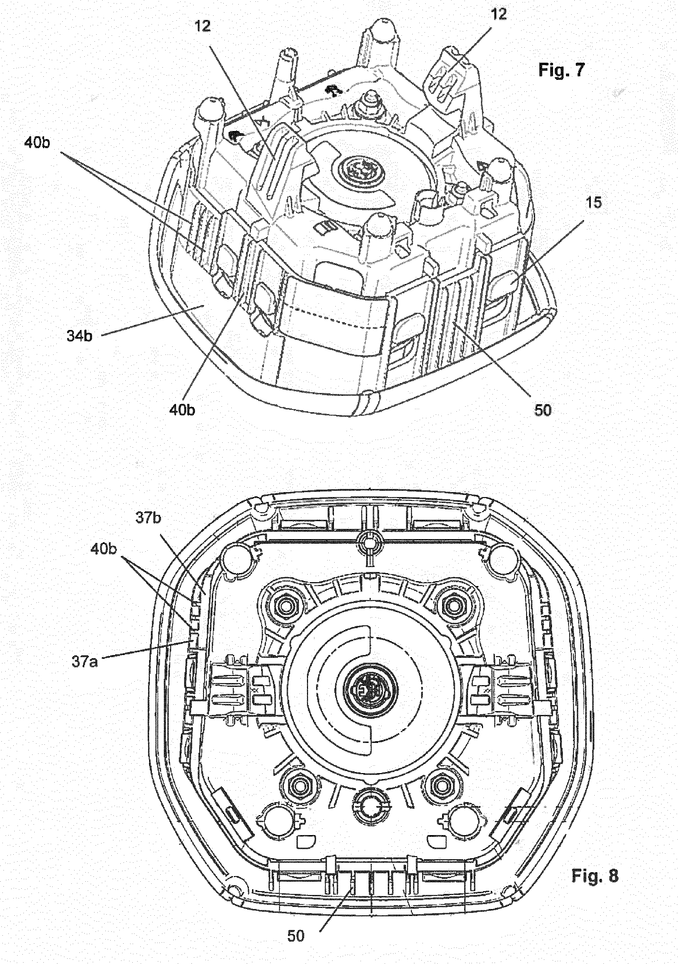

Figures 6 to 8 show the concept just described by means of a more detailed representation of an airbag module 5. One can see additionally mounting hooks 12 extending from the housing floor 11 and being intended for mounting the airbag module 5 to a (not shown) steering wheel body.

### List of reference numbers

- 5: airbag module
- 10: housing
- 11: housing floor
- 12: mounting hook
- 14: housing sidewall
- 15: attachment hook
- 16: deployment opening
- 20: airbag package
- 25: inflator
- 30: cover
- 32: roof
- 32a: central part
- 32b: projecting part
- 34: cover sidewall
- 34a, b, c: section of sidewall
- 35: window
- 36: cover sidewall main portion
- 36a: inner surface
- 36b: outer surface
- 37a: roof proximal part
- 37b: roof distal part
- 40: first kind of rib
- 40a: roof proximal section
- 40b: roof distal section
- 50: second kind of rib

## Claims

1. Airbag module (5) comprising
- a housing (10) having a housing floor (11) and a housing sidewall (14), said housing floor (11) and said housing sidewall (14) defining an accommodation space being open at an deployment opening (16) opposite the housing floor (11),
- an airbag package (20), wherein at least a part of said airbag package (20) is accommodated in said accommodation space,
- a cover (30) having a roof (32) and a cover sidewall (34), the roof (32) having a central part (32a) spanning over the deployment opening (16), the cover sidewall (34) extending from the roof (32) to a floor-side end,
wherein the cover sidewall (34) comprises a cover sidewall main portion (36) having an inner surface (36a) and an outer surface (36b) and a plurality of ribs (40, 50) each protruding from the cover sidewall main portion (36) and extending from a roof-side end to a roof-remote end, **characterized in that**
the plurality of ribs (40, 50) comprises a first kind of ribs (40) having a roof proximal section (40a) protruding from the inner surface (36a) of the cover sidewall main portion (36) and a roof distal section (40b) protruding from the outer surface (36b) of the cover sidewall main portion (36),
the cover sidewall main portion (36) of the section (34b) of the cover sidewall which shows the first kind of ribs (40) has a roof proximal part (37a) and roof distal part (37b), wherein the roof proximal part (37a) is outward relative to the roof distal part (37b), such that the roof proximal part (37a) and roof distal part (37b) are offset to one another, and
the total thickness of the section (34b) of the cover sidewall showing the first kind of ribs (40) is constant along the height of the ribs of the first kind (40).

2. Airbag module according to claim 1, **characterized in that** the cover sidewall (34) additionally comprises a second kind of ribs (50) protruding completely from the outer surface of the cover sidewall main portion.

## Patentansprüche

1. Airbagmodul (5), aufweisend
- ein Gehäuse (10) mit einem Gehäuseboden (11) und einer Gehäuseseitenwand (14), wobei der Gehäuseboden (11) und die Gehäuseseitenwand (14) einen Unterbringungsraum definieren, der an einer dem Gehäuseboden gegenüberliegenden Entfaltungsöffnung (16) offen ist (11),
- ein Airbagpaket (20), wobei wenigstens ein Teil des Airbagpakets (20) in dem Unterbringungsraum untergebracht ist,
- eine Abdeckung (30) mit einem Dach (32) und einer Abdeckungsseitenwand (34), wobei das Dach (32) einen zentralen Teil (32a) aufweist, der die Entfaltungsöffnung (16) überspannt, und wobei sich die Abdeckungsseitenwand (34) von dem Dach zu einem bodenseitigen Ende erstreckt (32),
wobei die Abdeckungsseitenwand (34) einen Abdeckungsseitenwandhauptabschnitt (36) mit einer inneren Oberfläche (36a) und einer äußeren Oberfläche (36b) und mehrere Rippen (40, 50), die jeweils von dem Abdeckungsseitenwandhauptabschnitt (36) vorstehen und sich von einem dachseitigen Ende zu einem dachfernen Ende erstrecken, aufweist,
**dadurch gekennzeichnet, dass**
die mehreren Rippen (40, 50) eine erste Art von Rippen (40) aufweisen, die ein dachnahes Teilstück (40a), das von der inneren Oberfläche (36a) des Abdeckungsseitenwandhauptabschnitts (36) vorsteht, und ein dachfernes Teilstück (40b), das von der äußeren Oberfläche (36b) des Abdeckungsseitenwandhauptteils (36) vorsteht, haben,
der Abdeckungsseitenwandhauptabschnitt (36) des Teilstücks (34b) der Abdeckungsseitenwand, der die erste Art von Rippen (40) aufweist, einen dachnahen Teil (37a) und einen dachfernen Teil (37b) hat, wobei der dachnahe Teil (37a) bezüglich des dachfernen Teils (37b) derart auswärts ist, dass der dachnahe Teil (37a) und der dachferne Teil (37b) zueinander versetzt sind, und
die Gesamtdicke des Teilstücks (34b) der Abdeckungsseitenwand, das die erste Art von Rippen (40) aufweist, entlang der Höhe der Rippen der ersten Art (40) konstant ist.

2. Airbagmodul nach Anspruch 1, **dadurch gekennzeichnet, dass** die Abdeckungsseitenwand (34) zusätzlich eine zweite Art von Rippen (50) aufweist, die vollständig von der äußeren Oberfläche des Abdeckungsseitenwandhauptabschnitts vorstehen.

## Revendications

1. Module de coussin de sécurité gonflable (5) comprenant
- un boîtier (10) comportant un fond de boîtier (11) et une paroi latérale de boîtier (14), ledit fond du boîtier (11) et ladite paroi latérale du boîtier (14) définissant un compartiment de logement étant ouvert au niveau d'un orifice de déploiement (16) faisant face au fond du boîtier (11),
- un ensemble coussin de sécurité gonflable (20), au moins une partie dudit ensemble coussin de sécurité gonflable (20) étant logée dans ledit compartiment de logement,
- un couvercle (30) comportant un toit (32) et une paroi latérale de couvercle (34), le toit (32) présentant une partie centrale (32a) s'étendant de part et d'autre de l'orifice de déploiement (16), la paroi latérale du couvercle (34) s'étendant du toit (32) à une extrémité du côté du fond,
la paroi latérale du couvercle (34) comprenant une partie principale de paroi latérale de couvercle (36) comportant une surface intérieure (36a) et une surface extérieure (36b) et une pluralité de nervures (40, 50) saillissant chacune de la partie principale de la paroi latérale du couvercle (36) et s'étendant d'une extrémité du côté du toit à une extrémité éloignée du toit, **caractérisé en ce que**
la pluralité de nervures (40, 50) comprend un premier type de nervures (40) comportant une section proximale par rapport au toit (40a) saillissant de la surface intérieure (36a) de la partie principale de la paroi latérale du couvercle (36) et une section distale par rapport au toit (40b) saillissant de la surface extérieure (36b) de la partie principale de la paroi latérale du couvercle (36), la partie principale de la paroi latérale du couvercle (36) de la section (34b) de la paroi latérale du couvercle qui présente le premier type de nervures (40) comporte une partie proximale par rapport au toit (37a) et une partie distale par rapport au toit (37b), la partie proximale par rapport au toit (37a) étant vers l'extérieur par rapport à la partie distale par rapport au toit (37b), de sorte que la partie proximale par rapport au toit (37a) et la partie distale par rapport au toit (37b) sont décalées l'une par rapport à l'autre, et
l'épaisseur totale de la section (34b) de la paroi latérale du couvercle présentant le premier type de nervures (40) est constante sur l'étendue de la hauteur des nervures du premier type (40).

2. Module de coussin de sécurité gonflable selon la revendication 1, **caractérisé en ce que** la paroi latérale du couvercle (34) comprend en outre un deuxième type de nervures (50) saillissant entièrement de la surface extérieure de la partie principale de la paroi latérale du couvercle.
